# EUROPÄISCHE PATENTANMELDUNG

(11) **EP 0 623 559 A1**
(43) Veröffentlichungstag der Anmeldung: **09.11.1994**
(21) Anmeldenummer: 93107137.7
(22) Anmeldetag: 03.05.1993
(51) Int. Cl.: C02F 1/52

(54) **Verfahren zur Abtrennung von gelösten Sulfaten aus wässrigen Lösungen, insbesondere Abwässern**

(71) Anmelder: A + F ANLAGEN-, UMWELT- UND FILTERTECHNIK GmbH & Co., W-6382 Friedrichsdorf 2 (DE)
(72) Erfinder: Trummheller, Gunther, W-6382 Friedrichsdorf (DE)
(74) Vertreter: Schubert, Siegmar, Dipl.-Ing.

(57) **Zusammenfassung**

Bei einem Verfahren zur Abtrennung von gelösten Sulfaten aus wässrigen Lösungen, insbesondere Abwässern, werden diese Sulfate als schwerlösliche Calciumaluminatsulfate ausgefällt. Um das Verfahren mit kurzen Reaktionszeiten durchzuführen, werden zur Ausfällung Calciumhydroxid-Suspension und wässrige Natriumaluminat-Lösung verwendet.

## Beschreibung

Die Erfindung betrifft ein Verfahren zur Abtrennung von gelösten Sulfaten aus wässrigen Lösungen, insbesondere Abwässern, durch Ausfällung als schwerlösliche Calciumaluminatsulfate. Als ein solches schwerlösliches basisches Calciumaluminatsulfat ist z.B. Ettringit bekannt.

Die Notwendigkeit, den Gehalt an Sulfat-Ionen in Abwässern und sonstigen wässrigen Lösungen zu verringern, ergibt sich insbesondere aus der Betonschädlichkeit dieser Sulfat-Ionen.

Zum Stand der Technik gehören daher Verfahren, durch Bildung von Calciumaluminatsulfaten den Gehalt an Sulfat-Ionen zu verringern:
J. D'Ans, H. Eick: Das System CaO-Al₂O₃-CaSO₄-H₂O in Zement-Kalk-Gips 6 (1953), S. 302-311
H.-G. Keller, M. Mehlmann, H. Peschen: Untersuchung zur Senkung der Sulfationenkonzentration in Abwässern durch Zugabe von Kalkhydrat und Calciumaluminaten in Forschungsbericht Nr. 2/84 der Forschungsgemeinschaft der Deutschen Kalkindustrie e.V..

Im einzelnen ist ein Verfahren zur Abtrennung von Sulfat-Ionen aus Industrieabwässern durch
(A) Ausfällung von schwerlöslichen Calciumaluminatsulfaten durch Zusatz von reaktivem Aluminiumoxid und/oder Calciumaluminaten zum Abwasser unter mechanischer Durchmischung und pH-Einstellung mit Ca(OH)₂ auf einen Wert im Bereich von 11,2 bis 11,8 und
(B) Abtrennung der gebildeten Calciumaluminatsulfate bekannt (EP 0 250 626 B1), bei dem in Stufe (A)
(A1) das reaktive Aluminiumoxid und/oder die Calciumaluminate gleichzeitig mit der Einstellung oder danach zugesetzt werden,
(A2) der pH-Wert des erhaltenen Fällungssystems während der gesamten Dauer der Fällungsreaktion durch Zudosierung von Ca(OH)₂ in fester Form oder in Form von Kalkmilch auf 11,2 bis 11,8 konstantgehalten wird und
(A3) die Fällungsreaktion bei einer Temperatur von 25 bis 35°C durchgeführt wird.

In einem anderen, in der Praxis angewandten Verfahren wird als Reaktionskomponente Tonerdeschmelzzement verwendet, um die Verbindungskomponenten Calciumoxid und Aluminiumoxid in das Reaktionssystem einzubringen.

Bei der Zerstörung von Betonbauteilen durch sulfathaltige Abwässer bildet sich Ettringit aus dem bereits abgebundenen Zement.

Bei den voranstehenden bekannten Prozessen und Verfahren sind durchweg verhältnismäßig schwer lösliche und infolgedessen nur wenig reaktive Reaktionskomponenten im Einsatz. Die Bildung von Calciumaluminatsulfaten läuft dehalb mit solchen Reaktionskomponenten auch nur verhältnismäßig langsam ab. Demzufolge mußte bei den bisher bekannten Verfahren zur Ausfällung von Sulfaten als Ettringit bzw. ettringitähnliche Verbindungen mit relativ langen Reaktionzeiten und damit verbundenen großen Reaktionsvolumina gerechnet werden.

Der vorliegende Erfindung liegt daher die Aufgabe zugrunde, ein Verfahren zur Abtrennung von gelösten Sulfaten aus wässrigen Lösungen, insbesondere Abwässern, durch Ausfällung als schwerlösliche Calciumaluminatsulfate zu entwickeln, welches mit kürzeren Reaktionszeiten abläuft. Zur Durchführung des Verfahrens sollen kleine Reaktionsvolumina genügen.

Diese Aufgabe wird erfindungsgemäß bei einem Verfahren zur Abtrennung von gelösten Sulfaten aus wässrigen Lösungen, insbesondere Abwässern, durch Ausfällung als schwerlösliche Calciumaluminatsulfate gelöst, indem außer Calciumhydroxid-Suspension wässrige Natriumaluminatlösung zugesetzt wird. Die wässrige Natriumaluminatlösung wird vorteilhaft aus gut wasserlöslichen Natriumaluminaten hergestellt.

Dieser Erfindung liegt die Erkenntnis auf Grund von Untersuchungen zugrunde, wonach es für die Ausfällung von Ettringit bzw. ähnlichen Verbindungen nicht notwendig ist, als Reaktionsteilnehmer eine Kombination zwischen Calciumoxid und Aluminiumoxid ähnlich wie im Tonerde-Schmelzzement vorliegend einzusetzen. Vielmehr hat es sich herausgestellt, daß die Reaktion zur Bildung von Calciumaluminatsulfaten auch vollständig abläuft, wenn Einzelkomponenten, in denen nur Calcium bzw. nur Aluminium in entsprechenden Bindungen vorliegt, verwendet werden. Hiernach konnten wasserlösliches Natriumaluminat als aluminathaltige Reaktionskomponente und vorteilhaft hochreaktive Kalkmilch als calciumhaltige Komponente eingesetzt werden.

Die Reaktion von Calciumsulfat mit Calciumhydroxid und Natriumaluminat zu Ettringit verläuft wie folgt: 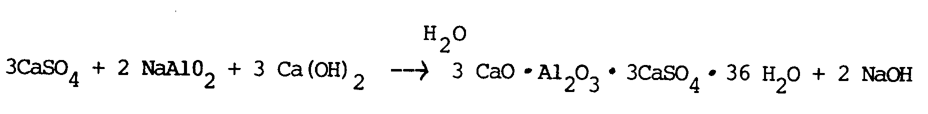
Die obige Reaktion läuft, wie die Praxis gezeigt hat, erheblich schneller ab als beispielsweise eine solche bei der Verwendung von Tonerde-Schmelzzement.

Der schnelle Ablauf der erfindungsgemäßen Reaktion ist nur zum Teil der hohen Wasserlöslichkeit des verwendeten Natriumaluminats zuzuschreiben. Es werden nämlich bei der Verwendung ebenfalls leichtwasserlöslichen Aluminiumsulfats gemäß obiger Literaturstelle J. D'Ans, H. Eick für einen quantitativen Umsatz einer gesättigten Kalk-Gipslösung zu Ettringit 14 Tage benötigt. Vermutlich ist für den raschen vollständigen Reaktionsablauf nach dem erfindungsgemäßen Verfahren innerhalb weniger Minuten die hohe Basizität der verwendeten Natriumaluminatlösung wesentlich. Es ist denkbar, daß sich infolge dieser Basizität das Calciumaluminatsulfat durch Gleichgewichtsverschiebung rascher bildet.

Bei dem erfindungsgemäßen Verfahren haben sich neben der raschen Einstellung des Reaktionsgleichgewichtes innerhalb weniger Minuten, wonach die Reaktion beispielsweise nach spätestens 15 Minuten Rührzeit abgeschlossen war, folgende Vorteile ergeben:
- Das Natriumaluminat wird nahezu stöchiometrisch genutzt.
- Bei stöchiometrischer Zugabe des Natriumaluminats verringert sich das Gehalt an gelöstem Sulfat auf < 20 mg/l.
- Der Reaktionsablauf ist gegenüber den Reaktionsbedingungen weitgehend unempfindlich. So kann der pH-Wert-Einfluß zwischen 11,5 pH und 13 pH vernachlässigt werden. Ebenso ist eine Temperaturschwankung im Bereich von 10-50°C ohne merklichen Einfluß.

Im einzelnen umfaßt das erfindungsgemäße Verfahren nach Anspruch 2 die Verfahrensschritte, daß die gelösten Sulfate enthaltenden Lösungen, insbesondere Abwässer, zunächst durch einen Zusatz der Calciumhydroxid-Suspension auf einen pH-Wert von mindestens 11,5 eingestellt werden und mit einem organischen Polyelektrolyten geflockt werden, daß anschließend durch Absetzung ein Dekantat gewonnen wird, daß das Dekantat mit einer unterstöchiometrischen Menge gesättigter Natriumaluminatlösung sowie einer adäquaten Menge Calciumhydroxid-Suspension behandelt wird und daß der entstehende Niederschlag durch Flockung und Sedimentation von der wässrigen Phase getrennt wird.

Die vorteilhafte Wirkung des erfindungsgemäßen Verfahrens ergibt sich u.a. aus einem Vergleichsversuch mit einem sulfathaltigen Abwasser aus einer Edelstahlelektropoliererei. Es wurden die Behandlungsergebnisse einerseits bei Verwendung von Portland-Zement und anderseits bei Einsatz von Natriumaluminat (NaAlO₂) verglichen. Die Versuchsbedingungen sind folgende:
1) Abwasserbeschaffenheit und Vorbehandlung
Als Ausgangsprodukt für die nachfolgend beschriebenden Vergleichsversuche stand Abwasser aus einer Edelstahlelektropoliererei zur Verfügung, welches ca. 10 g/l ausgeschlepptes Elektrolyt enthielt.
Dieses Abwasser wurde mit 10%-iger Kalkmilch (Calciumhydroxid Ca(OH)₂) auf pH 12 alkalisiert und nach einer Rührzeit von 30 Minuten mit einem organischen Polyelektrolyten geflockt. Das nach Absetzung gezogene Dekantat wurde über Weißbandfilter filtriert. Das Filtrat hatte folgende restliche Inhaltstoffe:

| | |
|---|---|
| SO4²⁻ | 3.750 mg/l |
| P aus Phosphat | < 1 mg/l |
| Ni | < 0,5 mg/l |
| Fe | < 0,5 mg/l |
| Cr | < 0,5 mg/l |

Die Vollständigkeit der Calciumsulfat-Fällung wurde probeweise durch weiteren Zusatz von Kalkmilch kontrolliert.
2) Fällung mit Portland-Zement
Das nach oben 1) gewonnene Filtrat wurde mit einer wässrigen Suspension, die aus Portland-Zement nach DIN 1164 und Stadtwasser 7° dH hergestellt wurde, versetzt und gerührt.
Im filtrierten Dekantat wurden folgende Werte für den Restsulfatgehalt gemessen:

| Rührzeit | SO₄-Gehalt |
|---|---|
| 1 h | 2.400 mg/l |
| 2 h | 750 mg/l |
| 3 h | 500 mg/l |
| 4 h | 500 mg/l |

Eine längere Rührzeit und/oder Vergrößerung des Portland-Zementzusatzes ergab keine weitere Veränderung des Restsulfatgehalts.
3) Behandlung mit Natriumaluminat-Lösung
Das nach oben 1) gewonnene Filtrat wurde mit einer unterstöchiometrischen Menge gesättigter Natiumaluminat-Lösung, die aus technischem Natriumaluminat entsprechend 54% Al₂O₃ und Stadtwasser 7° dH nach vorheriger Anhebung des pH-Werts durch Kalkmilchzusatz auf 12 pH hergestellt wurde, behandelt. Nach einer Rührzeit von 15 Minuten ergab sich ein Rest-Sulfat-Gehalt von 75 mg/l in der wässrigen Phase. Dieser Wert konnte durch eine Verlängerung der Rührzeit nicht mehr verändert werden.
Somit wurde gemäß 3) in einer gegenüber 2) wesentlich kürzeren Rührzeit ein erheblich verringerter Restsulfatgehalt erzielt.

## Patentansprüche

1. Verfahren zur Abtrennung von gelösten Sulfaten aus wässrigen Lösungen, insbesondere Abwässern, durch Ausfällung als schwerlösliche Calciumaluminatsulfate unter Verwendung von Calciumhydroxid-Suspension und wässriger Natriumaluminat-Lösung.

2. Verfahren nach Anspruch 1,
**dadurch gekennzeichnet,**
daß die gelöste Sulfate enthaltenden Lösungen, insbesondere Abwässer, zunächst durch einen Zusatz der Calciumhydroxid-Suspension auf einen pH-Wert von mindestens 11,5 eingestellt werden und mit einem organischen Polyelektrolyten geflockt werden, daß anschließend durch Absetzung ein Dekantat gewonnen wird, daß das Dekantat mit einer unterstöchiometrischen Menge gesättigter Natriumaluminat-Lösung sowie einer adäquaten Menge Calciumhydroxid-Suspension behandelt wird und daß der entstehende Niederschlag durch Flockung und Sedimentation von der wässrigen Phase getrennt wird.
